# FASCICULE DE BREVET EUROPEEN

(11) **EP 0 462 865 B1**
(45) Date de publication et mention de la délivrance du brevet: **02.03.1994**
(21) Numéro de dépôt: 91401502.9
(22) Date de dépôt: 07.06.1991
(51) Int. Cl.: B23P 19/06

(54) **Adaptateur pour le vissage ou le dévissage d'un élément de liaison fileté**
Adaptor zum Aufschrauben oder Abschrauben von einem Verbindungselement mit Gewinde
Adapter for screwing or unscrewing a screw-threaded connecting element

(30) Priorité: 20.06.1990 FR 9007728
(43) Date de publication de la demande: 27.12.1991
(73) Titulaire: FRAMATOME, 92400 Courbevoie (FR)
(72) Inventeur: Frizot, Alain, F-71710 Montcenis (FR)
(74) Mandataire: Lanceplaine, Jean-Claude

(56) Documents cités:
- EP-A- 0 166 587
- EP-A- 0 373 022

## Description

La présente invention a pour objet un adaptateur pour le vissage ou le dévissage d'un élément de liaison fileté interposé entre les extrémités en vis-à-vis d'un organe de vissage ou de dévissage automatique et l'élément de liaison fileté. Un tel adaptateur est décrit par exemple dans le document EP-A-0373022.

Pour visser ou dévisser des éléments de liaison filetés et plus particulièrement des éléments de liaison de grandes dimensions constitués par exemple par des goujons, on utilise des moyens automatiques, tels que des robots de vissage et de dévissage.

Généralement, les goujons sont pourvus d'un embout spécial qui peut être verrouillé directement sur le nez du robot de vissage ou de dévissage.

Or, dans certains cas, les goujons sont dépourvus de cet embout spécial si bien qu'il est nécessaire d'intercaler, entre le robot et l'extrémité supérieure du goujon, un adaptateur.

C'est notamment le cas pour les goujons de cuve de réacteurs nucléaires qui sont de type court et dépourvus de l'embout spécial de liaison entre le robot et ledit goujon.

Cet adaptateur sert à transmettre aux goujons, le couple de rotation pour le vissage ou le dévissage, mais également à débloquer ledit goujon de son implantation dans le cas où l'on éprouve des difficultés à le dévisser.

Ces difficultés peuvent provenir d'une part d'un colmatage des filets, d'autre part d'un point dur mécanique. Dans le premier cas, on s'aperçoit qu'il est nécessaire, pour agir avec efficacité, d'exercer un couple de dévissage d'une valeur plus élevée que celle initialement prévue.

Cet état de fait induit, au niveau de la connexion reliant le robot à l'élément de liaison fileté, des forces supplémentaires, donc parasites.

Dans le deuxième cas, la situation est particulièrement délicate. L'origine du point dur mécanique peut être due, soit à la présence d'un corps dur isolé, logé entre les filets, soit au fluage provoqué par un effort de serrage excessif ou bien, un effort en cours d'exploitation.

Quel que soit le type d'anomalies à éliminer, les adaptateurs utilisés jusqu'à présent ne permettent pas de résoudre efficacement le problème et demandent généralement un temps d'intervention assez long, ce qui est préjudiciable à la sécurité des personnes chargées de ces interventions, car elles peuvent être réalisées dans une zone souvent rendue dangereuse par le fait qu'elle est soumise à des fortes irradiations ou à une pollution chimique.

Le but de la présente invention est donc de proposer un adaptateur automatique pour le vissage ou le dévissage d'un goujon évitant les inconvénients précités et permettant, de par sa conception, une mise en place très rapide sous le nez du robot de vissage ou de dévissage, tout en offrant la possibilité de transmettre des vibrations verticales pour débloquer le goujon sans démanteler l'assemblage ainsi réalisé entre le robot et ledit élément de liaison fileté.

Suivant l'invention, l'adaptateur pour le vissage ou le dévissage d'un goujon comprenant un corps relié, à son extrémité supérieure, à un ensemble d'entraînement en rotation et en translation dudit corps, est caractérisé en ce qu'il comporte :
- des moyens de centrage du corps sur le goujon,
- des moyens de liaison en rotation entre ledit corps et le goujon,
- des moyens de liaison en translation entre ledit corps et le goujon,
- des moyens de liaison momentanée en rotation entre lesdits moyens de liaison en translation et ledit corps,
- et un distributeur hydraulique monté sur ledit corps.

Selon d'autres caractéristiques de l'invention :
- les moyens de centrage sont formés par un embout destiné à pénétrer dans un logement complémentaire ménagé à la partie supérieure dudit goujon,
- ledit embout est porté par un piston déplaçable selon l'axe dudit corps et rappelé par un ressort, ledit piston étant logé dans une douille formant cylindre d'un vérin et fixée à l'extrémité inférieure dudit corps,
- ledit vérin est alimenté en fluide sous pression par un conduit ménagé dans ledit corps et relié audit distributeur hydraulique,
- les moyens de liaison en rotation entre le corps et le goujon comprennent une douille amovible suspendue de manière élastique à l'extrémité inférieure dudit corps et solidaire en rotation avec ce dernier au moyen d'au moins un doigt d'entraînement,
- ladite douille amovible comporte au moins deux méplats intérieurs destinés à coopérer avec au moins deux méplats correspondants du goujon,
- les moyens de liaison en translation entre le corps et le goujon comprennent une coiffe de vissage supportée et montée libre en rotation sur ledit corps et entraînée en rotation par une couronne elle-même entraînée par un moteur porté par ledit corps,
- la coiffe de vissage comporte, à sa base, un taraudage compatible avec le filetage supérieur du goujon,
- la couronne est munie d'une denture intérieure coopérant avec un pignon entraîné en rotation par ledit moteur,
- les moyens de liaison momentanée en rotation entre lesdits moyens de liaison en translation et ledit corps comprennent un organe de verrouillage en rotation de ladite coiffe de vissage sur ledit corps,
- l'organe de verrouillage est formé par un pion déplaçable selon une direction perpendiculaire à l'axe du corps et dont l'extrémité libre coopère avec des alvéoles ménagés dans la coiffe de vissage,
- le pion est déplaçable sous l'action du fluide sous pression alimentant simultanément le vérin,
- le pion est rappelé par un ressort.

L'invention sera mieux comprise à l'aide de la description qui va suivre, donnée uniquement à titre d'exemple et faite en se référant aux dessins annexés, sur lesquels :
- la figure 1 est une vue schématique en coupe longitudinale partielle de l'adapteur selon l'invention,
- la figure 2 est une vue en coupe selon la ligne 2-2 de la figure 1,
- la figure 3 est une vue à plus grande échelle de l"extrémité inférieure de l'adaptateur et en coupe selon la ligne 3.3 de la figure 2.
- la figure 4 est une vue en coupe et à plus grande échelle des moyens de liaison momentanée en rotation entre la coiffe de vissage et le corps de l'adaptateur.

L'adaptateur conforme à l'invention, tel qu'il est représenté aux figures, est utilisé pour assurer la connexion entre une ensemble de vissage ou de dévissage automatique 1 et un élément de liaison fileté constitué par exemple par un goujon 2.

Cet adaptateur est constitué par un corps central 10 suspendu à l'ensemble 1 de vissage ou de dévissage et solidaire de celui-ci en rotation et en translation, par l'intermédiaire d'un organe de connexion approprié, comme par exemple un verrou à billes 3.

Pour permettre, sous l'action de l'ensemble 1, le vissage ou le dévissage du goujon 2, ainsi que le déblocage dudit goujon, le corps 10 de l'adaptateur est muni, à son extrémité inférieure :
- de moyens de centrage du corps 10 sur l'élément de liaison fileté 2,
- de moyens de liaison en rotation entre ledit corps 10 et l'élément de liaison fileté 2,
- de moyens de liaison en translation entre ledit corps 10 et l'élément de liaison fileté 2,
- et de moyens de liaison momentanée en rotation entre lesdits moyens de liaison en translation et ledit corps 10.

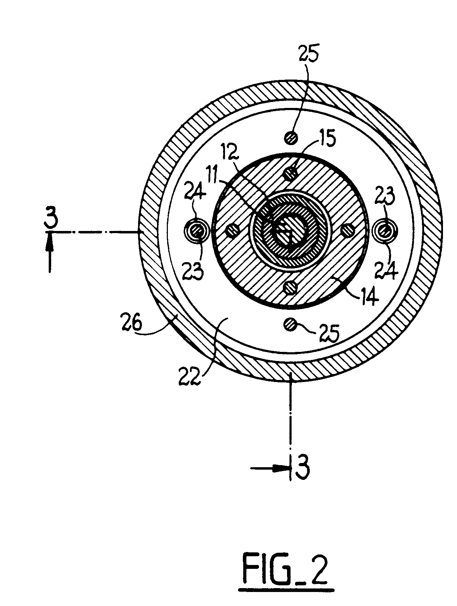

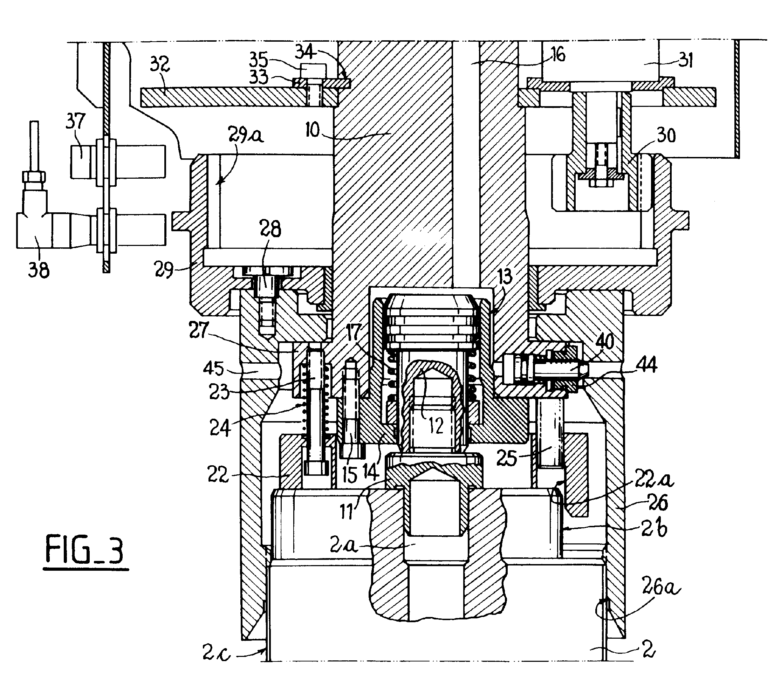

Les moyens de centrage du corps 10 sur le goujon 2 (Figs. 2 et 3 comprennent un embout 11 destiné à pénétrer dans un logement 2a de forme complémentaire ménagé à la partie supérieure dudit goujon. Cet embout 11 est porté par un piston 12 d'un vérin 13 à simple effet.

Le vérin 13 comporte un cylindre formé par une douille 14 fixée à l'extrémité inférieure du corps 10 par des vis 15.

Ce vérin 13 est alimenté en fluide sous pression par un conduit 16 ménagé dans le corps 10 de l'adaptateur de telle manière que le piston 12 se déplace selon l'axe dudit corps 10. Le piston 12 est rappelé par un ressort 17.

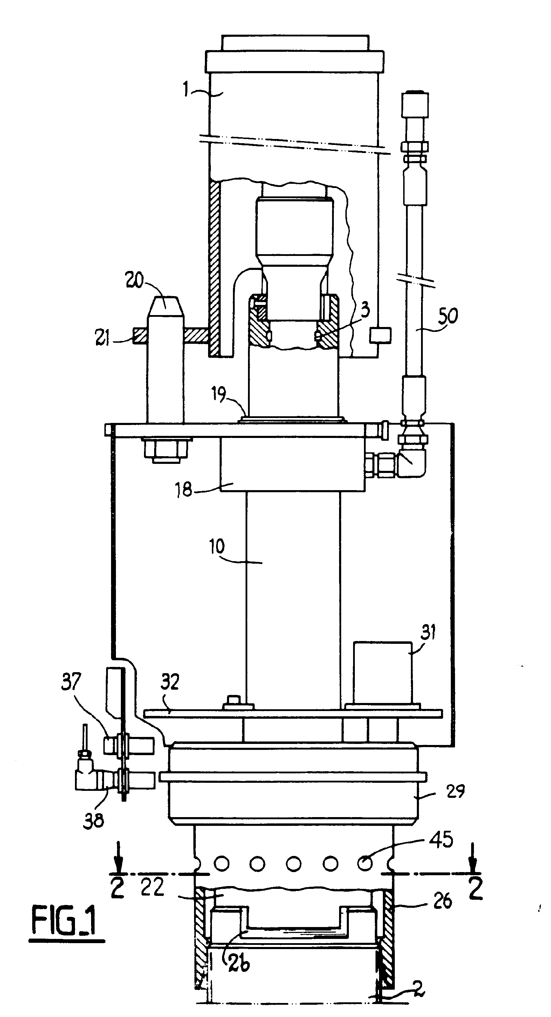

Le conduit 16 est raccordé, à l'opposé du vérin 13, à un distributeur hydraulique constitué d'un boîtier de raccord rotatif 18 libre en rotation sur le corps 10, mais bridé en translation sur ledit corps par un anneau élastique 19 (Fig.1).

Ce boîtier 18 est maintenu immobile en rotation par des tiges de guidage anti-rotation 20 qui s'engagent dans des oeilletons respectifs d'un manchon 21 solidaire de l'ensemble 1 de vissage ou de dévissage .

Les moyens de liaison en rotation entre le corps 10 et le goujon 2 (Fig.3) comprennent une douille amovible 22 suspendue de manière élastique sous le corps 10 au moyen de vis 23 et de ressorts 24, chaque ressort 24 étant monté autour d'une vis 23 entre la face inférieure dudit corps 10 et la face supérieure de ladite douille amovible 22.

Cette douille amovible 22 est entraînée en rotation par le corps 10 à l'aide de deux doigts 25 (Figs. 2 et 3) vissés dans ce dernier.

D'autre part, la douille amovible 22 comporte au moins deux méplats intérieurs 22a qui coopèrent avec au moins deux méplats 2b correspondants du goujon 2 de façon à entraîner ledit goujon a la manière d'une clé.

Les moyens de liaison en translation entre le corps 10 de l'adaptateur et le goujon 2 comprennent une coiffe de vissage 26 supportée par un épaulement 27 prévu à l'extrémité inférieure dudit corps 10.

La coiffe de vissage 26 montée libre en rotation sur le corps 10 comporte, à sa base, un taraudage 26a compatible avec le filetage supérieur 2c du goujon 2.

Par ailleurs, cette coiffe de vissage 26 est entraînée en rotation au moyen de vis 28 par une couronne 29 munie de dentures intérieures 29a coopérant avec un pignon 30 entraîné par un moteur 31 par exemple hydraulique.

Le moteur 31 est fixé sur une plaque support 32 qui est verrouillée en rotation sur le corps 10 par des plaquettes 33 venant pincer ledit corps 10 sur des méplats 34 correspondants. Ces plaquettes 33 sont fixées sur la plaque support 32 par des vis de blocage 35.

Les déplacements de la couronne 29 sont contrôlés par un capteur de proximité supérieur 37 et un capteur de proximité inférieur 38.

L'adaptateur comporte également des moyens de liaison momentanée en rotation entre lesdits moyens 26, 28, 29 et 30 de liaison en translation et ledit corps 10.

Cette liaison est réalisée en rendant momentanément solidaire en rotation le corps 10 de l'adaptateur et la coiffe de vissage 26.

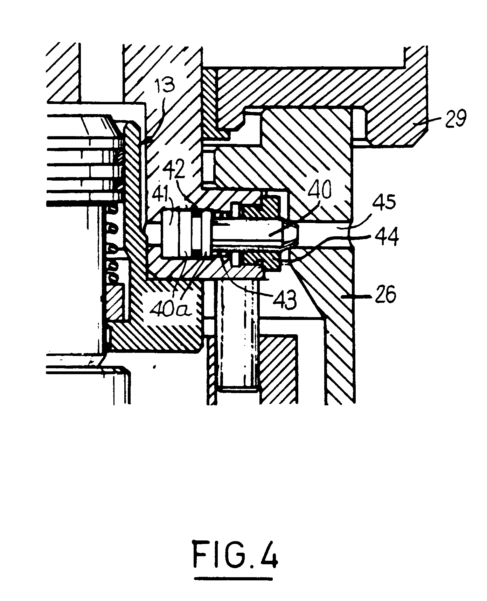

A cet effet, le corps 10 comporte à son extrémité inférieure, dans l'épaulement 27, un pion 40 déplaçable selon une direction perpendiculaire à l'axe dudit corps 10 (Fig. 4)

Ce pion 40 est monté dans une chambre 41 ménagée dans l'épaulement 27 et communiquant avec la chambre du vérin 13. Le pion 40 comporte deux nervures 40a entre lesquelles est interposé un joint d'étanchéité 42 et est rappelé par un ressort 43 disposé entre l'une des nervures 40a et une bague d'arrêt 44.

L'extrémité libre du pion 40 coopère avec des alvéoles 45 prévus tout autour de la coiffe 26 de façon à empêcher le dévissage de ladite coiffe à la place du goujon 2 au moment de la transmission des vibrations.

Le distributeur hydraulique là est relié par un flexible 50 (figure 1) à un dispositif d'alimentation en fluide sous pression non représenté.

L'adaptateur fonctionne de la manière suivante.

Tout d'abord, on équipe l'ensemble 1 de vissage ou de dévissage de l'adaptateur en solidarisant en rotation et en translation ces deux éléments par l'intermédiaire du verrou à billes 3.

Ensuite, l'opérateur commande la descente de l'ensemble 1 et de l'adaptateur jusqu'à ce que la douille 22 du corps 10 vienne s'appuyer sur la face supérieure du goujon 2, les ressorts 24 étant partiellement comprimés.

La coiffe 26 repose alors sur le premier filet du goujon 2 et l'embout 11 du piston 12 pénètre dans le logement 2a dudit goujon de façon à centrer le corps 10 de l'adaptateur sur ce goujon 2 avant le vissage de la coiffe 26.

L'opérateur commande par l'intermédiaire de l'ensemble 1 de vissage ou de dévissage la mise en rotation lente du corps 10. Dès que les méplats 22a de la douille 22 arrivent en face des méplats 2b du goujon 2, la douille tombe et verrouille ainsi en rotation le corps 10 et le goujon 2.

A la suite de ce verrouillage, l'opérateur commande la mise en rotation du moteur hydraulique 31 qui entraîne, par l'intermédiaire du pignon 30 et de la couronne 29, la coiffe 26. Cette coiffe 26 qui n'est pas parfaitement centrée sur le corps 10, étant donné le jeu au niveau des vis 28, s'autocentre sur le filet du goujon 2 et commence à se visser.

L'ordre d'arrêt du vissage de la coiffe 26 est donné par le capteur de proximité inférieur 34 situé en face de la couronne 29.

Ensuite, le fluide sous pression alimente, par le flexible 50, le distributeur hydraulique 18 et le conduit 16, simultanément la chambre du vérin 13 et la chambre 41.

Le piston 12 se déplace selon l'axe du corps 10 et exerce une pression par l'intermédiaire de l'embout 11 sur la face supérieure du goujon 2 et rattrape ainsi les jeux dans le taraudage 26a de la coiffe 26 lorsque celle-ci est vissée sur le goujon 2.

A cet instant, l'adaptateur est opérationnel pour les fonctions normales de l'ensemble 1 de vissage ou de dévissage qui sont donc le vissage ou le dévissage du goujon 2 avec la recherche en permanence du couple optimum.

En effet, l'ensemble 1 de vissage ou de dévissage est solidaire avec le goujon 2, d'une part, en rotation par l'intermédiaire du corps 10 et de la douille 22 et, d'autre, part, en translation par l'intermédiaire du corps 10 et de la coiffe de vissage 26.

Dans le cas où un goujon refuse de se dévisser sous l'action du couple habituel de desserrage, on a recours à la mise en vibrations verticales de ce goujon.

Deux cas peuvent se présenter, soit le pion 40 est déjà engagé dans un alvéole 45 si bien que la coiffe 26 ne peut pas se dévisser du goujon 2, soit ce pion 40 n'est pas engagé dans un alvéole 45.

Sous l'effet des vibrations émises par l'ensemble 1 de vissage ou de dévissage et transmises par le corps 10, qui s'ajoutent à l'effort du piston 12, la coiffe 26 se dévisse jusqu'à ce que le pion 40 tombe dans le premier alvéole 45 qui se présente.

La coiffe 26 est alors immobilisée en rotation avec le corps 10, et les vibrations verticales sont alors transmises jusqu'à la base du goujon 2, ce qui facilite son extraction et cela sans dévisser la coiffe 26, c'est-à-dire sans démanteler l'assemblage entre cette coiffe et le goujon.

Toutes les fonctions décrites ci-dessus sont gérées par un automate programmable, non représenté, installé dans le même pupitre de contrôle et de commande que celui de l'ensemble de vissage ou de dévissage.

L'adaptateur selon l'invention permet donc de faire passer, sans interruption, des vibrations verticales sans risque de desserrage au niveau des filetages de l'accouplement et, de par sa conception, demande un temps d'intervention très court pour sa mise en place.

De plus, il permet de réaliser, notamment dans le cas de goujons courts utilisés par exemple pour la fixation du couvercle sur une cuve de réacteur nucléaire, une liaison rigide goujon plus adaptateur, ce qui fait que l'on reconstitue rapidement la configuration d'un goujon long.

## Revendications

1. Adaptateur pour le vissage ou le dévissage d'un goujon (2), ledit adaptateur comprenant un corps (10) relié, à son extrémité supérieure, à un ensemble (1) d'entraînement en rotation et en translation dudit corps (10) et des moyens de liaison en rotation (22, 23, 24, 25) entre ledit corps (10) et le goujon (2), caractérisé en ce qu'il comporte :
- des moyens (11, 12) de centrage du corps (10) sur le goujon (2),
- des moyens (26, 28, 29, 30) de liaison en translation entre ledit corps (10) et le goujon (2),
- des moyens (40, 41, 45) de liaison momentanée en rotation entre lesdits moyens (26, 28, 29, 30) de liaison en translation et ledit corps (10),
- et un distributeur hydraulique (18) monté sur ledit corps (10).

2. Adaptateur selon la revendication 1, caractérisé en ce que les moyens de centrage sont formés par un embout (11) destiné a pénétrer dans un logement (2a) complémentaire ménagé à la partie supérieure dudit goujon (2).

3. Adaptateur selon la revendication 2, caractérisé en ce que ledit embout (11) est porté par un piston (12) déplaçable selon l'axe dudit corps (10) et rappelé par un ressort (17), ledit piston (12) étant logé dans une douille (14) formant cylindre d'un vérin (13) et fixée à l'extrémité inférieure dudit corps (10).

4. Adaptateur selon l'une des revendications 1 à 3, caractérisé en ce que ledit vérin (13) est alimenté en fluide sous pression par un conduit (16) ménagé dans ledit corps (10) et relié audit distributeur hydraulique (18).

5. Adaptateur selon la revendication 1, caractérisé en ce que les moyens de liaison en rotation entre le corps (10) et le goujon (2) comprennent une douille amovible (22) suspendue de manière élastique à l'extrémité inférieure dudit corps (10) et solidaire en rotation avec ce dernier au moyen d'au moins un doigt d'entraînement (25).

6. Adaptateur selon la revendication 5, caractérisé en ce que ladite douille amovible (22) comporte au moins deux méplats (22a) intérieurs destinés à coopérer avec au moins deux méplats (2b) correspondants du goujon (2).

7. Adaptateur selon la revendication 1, caractérisé en ce que les moyens de liaison en translation entre le corps (10) et le goujon (2) comprennent une coiffe de vissage (26) supportée et montée libre en rotation sur ledit corps (10) et entraînée en rotation par une couronne (29) elle-même entraînée par un moteur (31) porté par ledit corps (10).

8. Adaptateur selon la revendication 7, caractérisé en ce que la coiffe de vissage (26) comporte, à sa base, un taraudage (26a) compatible avec le filetage (2c) du goujon (2).

9. Adaptateur selon la revendication 7, caractérisé en ce que la couronne (29) est munie d'une denture intérieure (29a) coopérant avec un pignon (30) entraîné en rotation par ledit moteur (31).

10. Adaptateur selon l'une des revendications 1 à 7, caractérisé en ce que les moyens de liaison momentanée en rotation entre lesdits moyens (26,28,29,30) de liaison en translation et ledit corps (10) comprennent un organe (40) de verrouillage en rotation de ladite coiffe de vissage (26) sur ledit corps (10).

11. Adaptateur selon la revendication 10, caractérisé en ce que l'organe de verrouillage est formé par un pion (40) déplaçable selon une direction perpendiculaire à l'axe du corps (10) et dont l'extrémité libre coopère avec des alvéoles (45) ménagés dans la coiffe de vissage (26).

12. Adaptateur selon la revendication 11, caractérisé en ce que le pion (40) est déplaçable sous l'action du fluide sous pression alimentant simultanément le vérin (13).

13. Adaptateur selon la revendication 12, caractérisé en ce que le pion (40) est rappelé par un ressort (43).

## Claims

1. Adaptor for screwing or unscrewing a bolt (2), said adaptor comprising a body (10) joined, at its upper end, to a unit (1) for rotationally and translationally driving said body (10) and rotational connecting means (22, 23, 24, 25) between said body (10) and the bolt (2), characterised in that it comprises:
- means (11, 12) for centring the body (10) on the bolt (2),
- means (26, 28, 29, 30) for translationally interconnecting said body (10) and the bolt (2),
- means (40, 41, 45) for temporarily rotationally interconnecting said translational connecting means (26, 28, 29, 30) and said body (10),
- and a hydraulic distributor (18) mounted on said body (10).

2. Adaptor according to Claim 1, characterised in that the centring means are formed by a connector (11) intended to penetrate into a complementary socket (2a) arranged in the upper part of said bolt (2).

3. Adaptor according to Claim 2, characterised in that said connector (11) is carried by a piston (12) which can be displaced along the axis of said body (10) and is returned by a spring (17), the said piston (12) being housed in a bush (14) which forms the cylinder of a jack (13) and which is fixed to the lower end of the said body (10).

4. Adaptor according to one of Claims 1 to 3, characterised in that said jack (13) is supplied with pressurized fluid by a duct (16) arranged in the said body (10) and connected to the said hydraulic distributor (18).

5. Adaptor according to Claim 1, characterised in that the means for rotationally interconnecting the body (10) and the bolt (2) camprise a removable bush (22) suspended elastically from the lower end of said body (10) and connected for rotation with the latter by means of at least one driving finger (25).

6. Adaptor according to Claim 5, characterised in that the removable bush (22) comprises at least two inner flat surfaces (22a) intended to interact with at least two corresponding flat surfaces (2b) of the bolt (2).

7. Adaptor according to Claim 1, characterised in that the means for translationally interconnecting the body (10) and the bolt (2) comprise a screwing cover (26) supported and mounted so as to be freely rotatable on said body (10) and driven in rotation by a collar (29) which is itself driven by a motor (31) carried by the said body (10).

8. Adaptor according to Claim 7, characterised in that the screwing cover (26) comprises, at its base, a threading (26a) compatible with the thread (2c) of the bolt (2).

9. Adaptor according to Claim 7, characterised in that the collar (29) is provided with inner teeth (29a) which interact with a pinion (30) rotationally driven by said motor (31).

10. Adaptor according to one of Claims 1 to 7, characterised in that the means for temporarily rationally connecting said translational connecting means (26, 28, 29, 30) and said body (10) comprise a member (40) for rotationally locking said screwing cover (26) on said body (10).

11. Adaptor according to claim 10, characterised in that the locking member is formed by a pin (40) which is movable in a direction perpendicular to the axis of the body (10) and the free end of which interacts with recesses (45) formed in the screwing cover (26).

12. Adaptor according to Claim 11, characterised in that the pin (40) is displaceable under the action of the pressurized fluid simultaneously supplying the jack (13).

13. Adaptor according to Claim 12, characterised in that the pin (40) is returned by a spring (43).

## Patentansprüche

1. Adapter zum Fest- oder Losschrauben eines Bolzens (2), welcher Adapter einen Körper (10), der an seinem oberen Ende mit einem Rotations- und Translationsantrieb (1) für den Körper (10) verbunden ist, und Mittel (22, 23, 24, 25) zur drehfesten Verbindung des Körpers (10) mit dem Bolzen (2) aufweist, dadurch **gekennzeichnet**, daß er aufweist:
- Mittel (11, 12) zur Zentrierung des Körpers (10) auf den Bolzen (2),
- Mittel (26, 28, 29, 30) zur translationsfesten Verbindung des Körpers (10) mit dem Bolzen (2),
- Mittel (40, 41, 45) zur vorübergehenden drehfesten Verbindung des Körpers (10) mit den Mitteln (26, 28, 29, 30) zur translationsfesten Verbindung,
- und einen an dem Körper (10) montierten Hydraulikverteiler (18).

2. Adapter nach Anspruch 1, dadurch **gekennzeichnet**, daß die Zentriermittel gebildet werden durch ein Ansatzstück (11), das dazu bestimmt ist, in eine komplementäre Aufnahme (2a) einzudringen, die im oberen Teil des Bolzens (2) ausgebildet ist.

3. Adapter nach Anspruch 2, dadurch **gekennzeichnet**, daß das Ansatzstück (11) an einem längs der Achse des Körpers (10) verschiebbaren und durch eine Feder (17) zurückgestellten Kolben (12) gehalten ist, der in einer Buchse (14) angebracht ist, die den Zylinder eines Stellgliedes (13) bildet und am unteren Ende des Körpers (10) befestigt ist.

4. Adapter nach einem der Ansprüche 1 bis 3, dadurch **gekennzeichnet**, daß das Stellglied (13) über eine in dem Körper (10) ausgebildete und mit dem Hydraulikverteiler (18) verbundene Leitung (16) mit Druckfluid versorgt wird.

5. Adapter nach Anspruch 1, dadurch **gekennzeichnet**, daß die Mittel zur drehfesten Verbindung des Körpers (10) mit dem Bolzen (2) eine abziehbare Buchse (22) aufweisen, die elastisch am unteren Ende des Körpers (10) aufgehängt und durch wenigstens einen Mitnehmer-Finger (25) drehfest mit letzterem verbunden ist.

6. Adapter nach Anspruch 5, dadurch **gekennzeichnet**, daß die abziehbare Buchse (22) wenigstens zwei innere Abflachungen (22a) aufweist, die dazu bestimmt sind, mit wenigstens zwei entsprechenden Abflachungen (2b) des Bolzens (2) zusammenzuwirken.

7. Adapter nach Anspruch 1, dadurch **gekennzeichnet**, daß die Mittel zur translationsfesten Verbindung des Körpers (10) mit dem Bolzen (2) eine Schraubkappe (26) aufweisen, die drehbar an dem Körper (10) gehalten und durch einen Kranz (29) drehantreibbar ist, der seinerseits durch einen an dem Körper (10) gehaltenen Motor (31) angetrieben wird.

8. Adapter nach Anspruch 7, dadurch **gekennzeichnet**, daß die Schraubkappe (26) an ihrer Basis ein mit dem Gewinde (2c) des Bolzens (2) kompatibles Innengewinde (26a) aufweist.

9. Adapter nach Anspruch 7, dadurch **gekennzeichnet,** daß der Kranz (29) mit einer Innenverzahnung (29a) versehen ist, die mit einem durch den Motor (31) drehangetriebenen Ritzel (30) zusammenwirkt.

10. Adapter nach einem der Ansprüche 1 bis 7, dadurch **gekennzeichnet,** daß die Mittel zur vorübergehenden drehfesten Verbindung zwischen den Mitteln (26, 28, 29, 30) zur translationsfesten Verbindung und dem Körper (10) ein Organ (40) zur drehfesten Verriegelung der Schraubkappe (26) an dem Körper (10) umfassen.

11. Adapter nach Anspruch 10. dadurch **gekennzeichnet,** daß das Verriegelungsorgan durch einen Stößel (40) gebildet wird, der in einer zur Achse des Körpers (10) rechtwinkligen Richtung verschiebbar ist und dessen freies Ende mit in der Schraubkappe (26) ausgebildeten Höhlungen (45) zusammenwirkt.

12. Adapter nach Anspruch 11, dadurch **gekennzeichnet**, daß der Stößel (40) unter der Wirkung des Druckfluids verschiebbar ist, das zugleich das Stellglied (13) beaufschlagt.

13. Adapter nach Anspruch 12, dadurch **gekennzeichnet**, daß der Stößel (40) durch eine Feder (43) zurückgestellt wird.
